# EUROPEAN PATENT APPLICATION

(11) **EP 4 706 998 A1**
(43) Date of publication of application: **11.03.2026**
(21) Application number: 25197559.5
(22) Date of filing: 22.08.2025
(51) Int. Cl.: B60C 23/06, B60C 15/06, B60C 19/00, B29D 30/00

(54) **TIRE, METHOD AND SYSTEM INTEGRATING A SENSOR AT A RIM FLANGE TRANSITION AREA OF A TIRE BY CAVITY FORMATION**

(30) Priority: 29.08.2024 US 202463688463 P; 29.07.2025 US 202519283992
(71) Applicant: The Goodyear Tire & Rubber Company, Akron, OH 44316 (US)
(72) Inventor: WEST, Jeffrey McKay, Uniontown, 44685 (US); GLICKSTEIN, Jarred, Akron, 44316 (US)
(74) Representative: Kutsch, Bernd

(57) **Abstract**

A system and a tire (100) is disclosed. The tire (100) comprises a bead (124), at least one ply (127) that wraps around the bead (124), a chafer (121) configured to at least partially form a seal with a rim flange (203) of a wheel, and a sensor indentation (206) in an axially outward side of the chafer (121). The sensor indentation (206) is configured to receive a sensor device (106). Also, a method is disclosed comprising: providing a sensor indentation (206) in an axially outward side a chafer (121) of a tire (100), wherein the sensor indentation (206) is configured to receive a sensor device (106) and wherein the chafer (121) is configured to at least partially form a seal with a rim flange (203) of a wheel; and inserting the sensor device (106) into the sensor indentation (206) of the chafer (121) of the tire (100).

## Description

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

Often it is desirable to collect electronic data about the conditions in and around the tire. Such data can be communicated to the various different electronic systems of the vehicle, such as vehicle stability and/or braking systems, in order to provide improved control of the vehicle as well as to monitor or track driving behavior.

### SUMMARY OF THE INVENTION

The invention relates to a tire in accordance with claim 1, to a method in accordance with claim 6, and to a system in accordance with claim 11.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a cross-sectional perspective view of a tire and a rim according to various embodiments of the present invention.
FIG. 2 is a cross-sectional view of a tire according to various embodiments of the present invention.
FIG. 3 is a flowchart illustrating how a sensor can be integrated within a tire according to various embodiments of the present invention.

### DEFINITIONS

"Axial" and "axially" mean lines or directions that are parallel to the axis of rotation of the tire.

"Axially inward" and "axially inwardly" include an axial direction that is toward the axial center of the tire.

"Axially outward" and "axially outwardly" include an axial direction that is away from the axial center of the tire.

"Bead" means that part of the tire comprising an annular tensile member wrapped by ply cords and shaped, with or without other reinforcement elements such as flippers, chippers, apexes, toe guards and chafers, to fit the design rim.

"CAN bus" is an abbreviation for controller area network.

"Carcass" means the tire structure apart from the belt structure, tread, undertread, and sidewall rubber over the plies, but including the beads.

"Circumferential" means lines or directions extending along a perimeter of a surface perpendicular to the axial direction.

"Equatorial plane (EP)" means the plane perpendicular to the tire's axis of rotation and passing through the center of its tread.

"Inboard side" means the side of the tire nearest the vehicle when the tire is mounted on a wheel and the wheel is mounted on the vehicle.

"Innerliner" means the layer or layers of elastomer or other material that form the inside surface of a tubeless tire and that contain the inflating fluid within the tire.

"Lateral" means an axial direction.

"Lateral edges" means a line tangent to the axially outermost tread contact patch or footprint as measured under normal load and tire inflation, the lines being parallel to the equatorial centerplane.

"Outboard side" means the side of the tire farthest away from the vehicle when the tire is mounted on a wheel and the wheel is mounted on the vehicle.

"Radial" and "radially" mean lines or directions that are perpendicular to the axis of rotation of the tire.

"Radially inward" and "radially inwardly" include a radial direction that is toward the central axis of rotation of the tire.

"Radially outward" and "radially outwardly" include a radial direction that is away from the central axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

### DETAILED DESCRIPTION OF PREFERRED EMBODIMENTS OF THE INVENTION

Disclosed herein are various examples related to systems and methods for integrating sensors at a rim flange transition area of a tire. Reference will now be made in detail to the description of the embodiments as illustrated in the drawings, wherein like reference numbers indicate like parts throughout the several views.

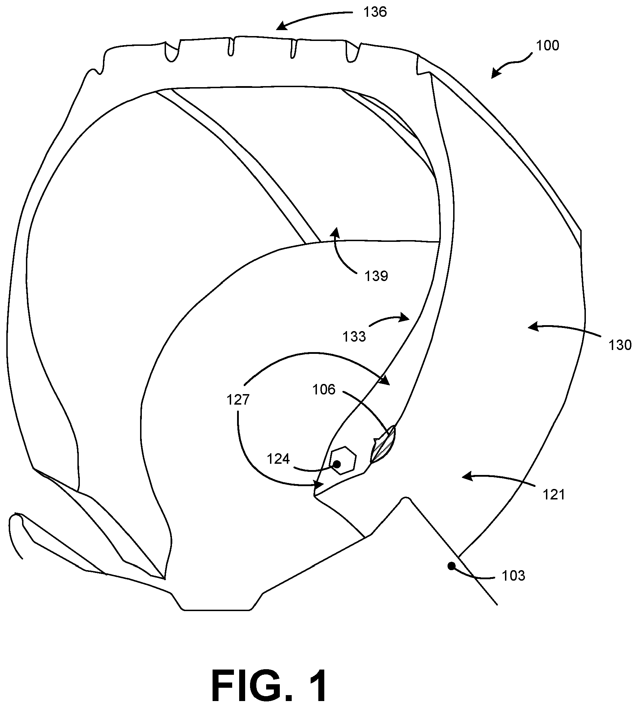

With reference to FIG. 1, shown is a cross-sectional perspective view of a tire 100, a sensor device 106, and a rim 103. In various examples, the sensor device 106 can be integrated with the tire 100 at a rim flange transition area or rim flange contact area. The rim flange transition area can include an area of the tire 100 that makes contact with at least a portion of a rim flange of the rim 103. In some examples, the rim flange transition area can make contact with at least a portion of a rim flange of the rim 103 when the tire 100 is seated. In some examples, the rim flange transition area can make contact with at least a portion of a rim flange of the rim 103 when the tire 100 is under load of a vehicle sitting and/or in motion. As a result, in some examples, a sensor device 106 that is integrated with the tire 100 at a rim flange transition area can be concealed and protected by at least a portion of the rim flange of the rim 103. In further examples, the entirety of the sensor device 106 can be concealed and protected by at least a portion of the rim flange of the rim 103.

The placement of the sensor device 106 at a rim flange transition area can provide further utility because the rim flange transition area is one location of the tire 100 where the forces are transferred from the tire 100 to the rim 103. This rim flange transition area can experience dynamic forces from flexion (e.g., axially, radially, or any combination thereof) about the rim flange, circumferential slipping, and other circumferential motion between the rim 103 and the tire 100, as well as other axial, radial, and circumferential forces.

The tire 100 can include a commercial tire 100 for a commercial rim 103, a consumer tire 100 for a consumer rim 103, an industrial tire 100 for an industrial vehicle rim, and so on. A consumer rim 103 can generally have a more vertical rim flange while a commercial rim 103 can have a slant or angle axially outward relative to a consumer rim 103. The sensor integrations described herein can be applied to any tire 100 and rim 103 combination.

The tire 100 can include a chafer 121, a bead 124, a ply 127, a sidewall 130, a liner 133, tread 136, as well as tire reinforcement components 139. The chafer 121 can include an extruded component that wraps around the bead area and bead 124 of the tire. The chafer 121 can interface with the rim 103 of a wheel to form a seal between the tire 100 and wheel, for example, using a rim flange. The chafer 121 can be made from an abrasion resistant rubber that enables it hold up to the wear the rim 103 exerts on the tire 100.

The bead 124 can include a wire that can be designed to have a predetermined tensile strength to provide the structure to hold the tire 100 to the rim 103 of the wheel. The bead 124 can be coated with rubber and can include a cross section with a predetermined diameter and a predetermined number of sides (or can be round). The bead 124 can also include a predetermined number of turns.

The liner 133 can include a calendared sheet of rubber that covers the inside of the tire. The liner 133 can be made from materials that allow the tire to hold the air pressure within the tire.

The ply 127 can include a calendared sheet of rubber coated fabric and/or cords. In some examples, the other components of the tire 100 can be either directly or indirectly connected to the ply 127. The ply 127 can wrap around the bead 124 on both sides of the tire 100 and gives the tire 100 its strength and the ability to flex without losing its shape.

The sidewall 130 can include an extruded component that can form a visible external portion of the tire 100. The sidewall 130 can protect the ply 127 from the environment, is abrasion resistant, and provides a substrate for the lettering and decorations to be molded into the tire. Sidewalls can have multiple compounds included in different zones such as a zone of white rubber for white sidewall tires.

Tread 136 can include an extruded component. Tread 136 can be made from a wide range of compounds based on the application of the tire 100. Tread 136 can provide a substrate for the tread pattern to be molded into the tire 100. The tread 136 contacts the road and gives the tire 100 grip to accelerate, stop, and corner. The tread 136 also provides cushioning for a smooth ride.

The tire reinforcement components 139 can refer to one or more calendared sheets of rubber or rubber-coated materials. For example, tire reinforcement components 139 can include belts and overlay. Belts can include rubber-coated steel wire and overlay can include rubber coated fabric. The belt tire reinforcement components 139 can help provide rigidity, strength, and puncture resistance to the crown area of the tire. Many tires include overlay which is wrapped around the tire and covers the belts. The overlay tire reinforcement components 139 can help improve the speed capabilities of high-performance tires.

A commercial, consumer, or industrial tire 100 can be designed to handle a wide range of purposes and driving conditions. For example, a tire 100 can be designed for off road performance, high speed performance, heavy load carrying, and all-season driving conditions, and so on. As a result of the variety of tire types, the manufacturing processes can produce a wide variety of rubber compounds and components that can be combined into a tire 100. Generally, a manufacturing process can include mixing, extrusion, calendering, building, curing, and post-curing stages. The mechanisms described herein for integrating sensors (*e.g*., a sensor device 106) at a rim flange transition area of a tire 100 can include integration at the curing stage and/or the post-curing stage.

In the mixing stage natural and/or synthetic rubbers can be mixed with other chemicals to create a rubber compound that serves a particular function within the tire 100. Many versions of rubber compounds can be used based on location in the tire 100 and the tire performance or purpose. The various ingredients can be mixed in predetermined amounts according to a predetermined specification. In the extrusion stage, some of the mixed rubber compound can be extruded or pushed through a die to create shapes made of one or more different compounds in different locations to be used in the tire 100. This can include tread extrusions and sidewall extrusions, among others. In the calendering stage, rubber can be calendered or pressed into a rubber sheet and/or impregnated into fabric or steel to create a rubber coated reinforced sheet to be cut into components for the tire 100. Examples of resulting tire components include inner liner, body plies, and belts. There are many versions of fabric and steel as well as compounds that can be used based on the type and service of the tire 100.

In the tire building stage, the various components are combined together to create an uncured (green) tire 100. The green tire can be assembled in a particular order, for example, from the inside out. This can include wrapping the various components around a drum and forcing them together using internal air pressure and rollers pressing from the outside to consolidate the components together into a green tire 100.

In the curing stage, the uncured or green tire 100 can be placed into a mold which is mounted into a press. The tire 100 can be loaded into the press and held in place, for example, using a bladder that can inflates into the tire at low pressure. The tire 100 can be held in place as a mold closes around the tire 100. Once closed, high pressure steam or gas can fill the bladder forcing the tire 100 into the mold. The tire 100 can take the final shape of the tire 100. The curing stage can also include applying heat energy to stimulate a chemical reaction between the rubber compounds and other materials.

In some examples, the mold used in the curing stage can form a sensor indentation in the tire 100. The sensor indentation can include at least one alignment element such as one or more ridge or angle that causes a sensor device 106 to align in a predetermined orientation within the sensor indentation and thus align in a predetermined orientation relative to the tire 100. This can enable sensors disposed within the sensor device 106 to be properly oriented in a predetermined orientation so that the sensors operate correctly. The manufacturing process and devices can connect the sensor device 106 to the sensor indentation in the tire 100 using an adhesive. The manufacturing process and devices can also connect the sensor device 106 to the sensor indentation in the tire 100 before curing and cure the sensor device 106 against the tire. In some examples, this can include a curing process that first molds the sensor indentation in the tire 100, places the sensor device 106 against the tire 100, and then continues the curing process by curing the sensor device 106 against the tire 100.

The manufacturing process and devices can also connect the sensor device 106 to the sensor indentation in the tire 100 using a chemical agent for vulcanization in a post-cure process. A heating element can also reheat the tire 100 in a post-cure process and the sensor device 106 can be placed against the reheated tire 100. In some examples, the sensor device 106 can itself be coated on at least one surface using a rubber material. In some examples, the sensor device 106 can be enveloped using a rubber material.

The sensor device 106 can detect certain real-time parameters of the tire 100. To this end, the sensor device 106 can include, for example, a wireless communication device (e.g., a Bluetooth^{®} low-energy (BLE) or near field communication (NFC)) device or processor, a piezoelectric sensor, an inertial sensor, and/or another types of component or sensor. In some examples, the sensor device 106 can communicate with or be used in an overall system that includes a tire pressure monitoring system (TPMS), an anti-lock braking system (ABS), a vehicle stability system, a traction control system, and/or other electronic system of a vehicle. In other examples, the sensor device 106 can be used independently of one or more components of the overall system.

The sensor device 106 can include one or more piezoelectric component(s) or element(s) that can harvest energy and be used to measure parameters of the tire based at least in part due to changes in pressure, strain, force, acceleration, or temperature of the piezoelectric component or element during motion of the tire 100. In some examples, a non-piezoelectric force, pressure, or strain transducer component can also experience the forces and harvest energy and/or sensor readings. The location of the sensor device 106 in the rim flange transition area or rim flange contact area of the tire 100 can enable the sensor device 106 to generate larger amount of energy relative to other areas of the tire 100. The sensor device 106 can include an energy storage device such as a capacitive storage device, a battery, or any combination thereof. A piezoelectric component can harvest energy that is then stored in the energy storage device to operate the sensor device 106.

In this area, the sensor device 106 can be fully (or partially) sandwiched between the rim 103 and the tire 100, providing compressive strain that can provide energy to the piezoelectric component. While the sensor device 106 can appear to be strongly held between the tire 100 and the rim 103 in a static manner, the forces can be dynamic in operational conditions. For example, compressive strain can increase and decrease based on rotation of the tire 100 and its interface with the road or travel surface. When the sensor device 106 is radially aligned with at least a portion of a contact zone or contact patch, the compressive forces and other strains applied to the sensor device 106 can be greater. The greater energy potential can be achieved while being more protected than in other areas of the tire 100. The rim flange transition area can also provide opportunity to measure forces that can indicate slipping of the tire 100 relative to the rim 103, which can be difficult to achieve using sensors placed in other areas.

The sensor device 106 can obtain data that can enable the computation of values for parameters such as steering angle, tire slip relative to the road, tire slip relative to the rim 103, vehicle cornering force, and other parameters. These values can be computed using the strain and compressive forces experienced by the sensor device 106. In some examples, three orthogonal sensors can be used for three axis strain sensing.

Because the rim flange transition area can be relatively thin (several millimeters) for most tires 100, the sensor device 106 can measure at least one inertial measurement in combination with an offset planar strain and perform a decoupling operation to generate the three principal strain axes. The sensor device 106 can also include a three-dimensional inertial sensor, a two-dimensional inertial sensor, or a one-dimensional inertial sensor. The inertia sensor can utilize a MEMS type or other sensing element to measure 1, 2, or 3 axis inertia which may be used in conjunction with the strain sensor measurement of sensor. The inertial sensor can be located together with the piezoelectric strain sensors as part of the sensor device 106, thereby enabling the inertia measurements to be used for the decoupling calculations. Inertia measurements from other locations away from the sensor device 106 can be too far away to accurately perform the decoupling. The sensor device 106 can measure offset planar strain using two strain measurements in a plane. The sensor device 106 can measure a circumferential strain that is tangential to an axial axis of the tire 100 (and wheel), and a particular radial axis extending to the sensor device 106. The sensor device 106 can also measure radial strain. In various examples, the sensor device 106 can be held between the tire 100 and the rim 103 such that it is aligned with the radial axis or aligned at a known angle relative to the radial axis. In some examples, the sensor of the sensor device 106 that measures radial strain can be aligned in a plane formed by the radial axis and the axial axis. The inertia measurements can be used to calculate the three principal strain axes using the offset planar strain (e.g., strain values for circumferential strain and radial strain).

The values for the three principal strain axes measured or calculated using measurements of the sensor device 106 can generate a number of types of output values. Deformation values for the tire 100, load values, and other values can be generated as well. In some examples, tire pressure can be used for deformation and load value calculations. Load values can include circumferential, lateral, and radial load values can be generated. In some examples, the sensor device 106 can receive, for example wirelessly or using a wired connection, a tire pressure value from another sensor device that can sense the inflation pressure within a cavity of the tire 100, and a temperature sensor to sense the temperature of the tire 100 and/or the temperature in the cavity of the tire 100. The sensor device 106 can wirelessly transmit the strain values, inertia values, and other sensor values to a vehicle system. In some examples, the sensor device 106 can include a memory or other data storage device that can store strain values and inertial values, among other sensor values.

The sensor device 106 can, in some examples, comprise a processor and memory to store tire identification (ID) information for each specific tire 100. For example, the tire ID can include manufacturing information for the tire 100, including the tire model; size information, such as rim size, width, and outer diameter; manufacturing location; manufacturing date; a treadcap code that includes or correlates to a compound identification; a mold code that includes or correlates to a tread structure identification, or other information. The tire ID may also include a service history or other information to identify specific features and parameters of each tire 100. The sensor device 106 can further include an antenna for wirelessly transmitting measured parameters and tire ID data to a remote device or processor for analysis, such as a processor integrated into a vehicle electronic control unit and/or a Controller Area Network (CAN) bus associated with the vehicle.

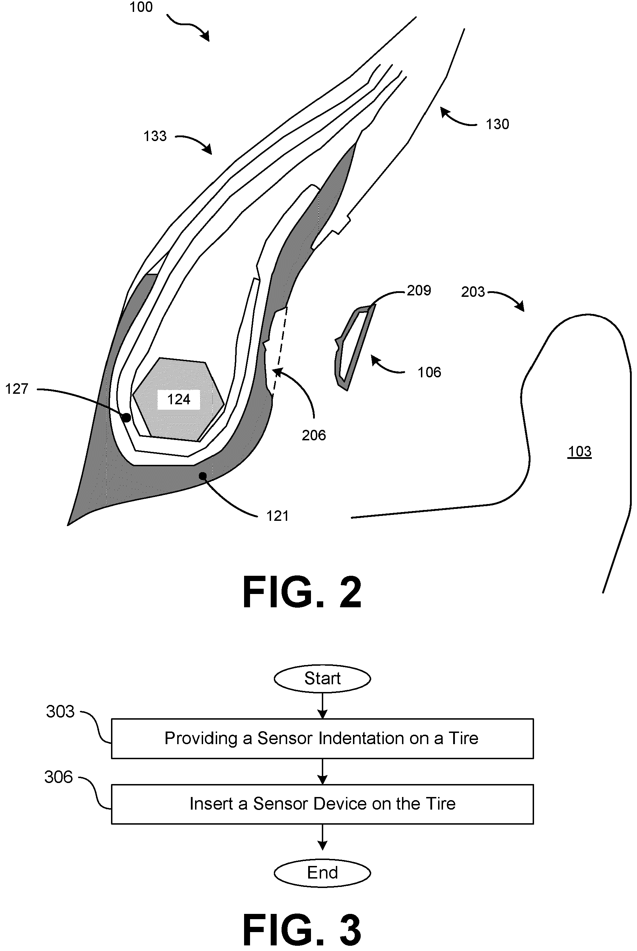

Moving to FIG. 2, shown is a cross-sectional view of a portion of a tire 100 and a portion the rim 103 corresponding to a rim flange 203. This figure can provide further detail with respect to the components of the tire 100, the rim 103, and the sensor device 106. The shown portion of the tire 100 can include the chafer 121, the bead 124, the ply 127, the sidewall 130, and the liner 133. The chafer 121 can be shown by the darker area of the tire 100.

In this example, the sensor indentation 206 can be located in the chafer 121. In other examples, the sensor indentation 206 can be located at least partially in the chafer 121 and at least partially in the sidewall 130. Multiple sensor indentations 206 can be provided for multiple sensor devices 106. In some examples, each of the two sides of a tire, corresponding to the two rim edges of a wheel, can include at least one sensor indentation 206. The sensor indentation 206 can be formed in the tire 100 during the manufacturing of the tire 100. In some embodiments, the sensor indentation 206 can be stamped, pressed, cut, or otherwise formed after the tire 100 has been produced. This can enable retrofitting a manufactured tire.

While FIG. 2 depicts one cross-sectional shape of the sensor indentation 206, the sensor indentation 206 can be any shape or size configured to receive a sensor device 106. The periphery of the sensor indentation 206 can be in the shape of a circle, a regular polygonal shape such as a square, triangle, rectangle, hexagon, or octagon, *etc.*, or any bespoke shape. In some embodiments, the sensor indentation 206 can be a few millimeters deep (approximately 0.5-5 millimeters, 5-10 millimeters, or 10-15 millimeters, depending on the thickness of the chafer 121 and the size of the sensor device 106).

In some embodiments, the sensor indentation 206 is configured to receive a sensor device 106. The sensor device 106 can be configured to fit the shape of the sensor indentation 206 and fit within the sensor indentation 206 such that an exterior surface of the sensor device 106 is flush, or nearly flush, with an outward side of the tire 100. The outward sides of the tire 100 can include both an outboard side and an inboard side of the tire 100 that are axially outward relative to the ply 127. The sensor indentation 206 can be designed such that the sensor device 106 forms a smooth continuous surface of the tire in conjunction with the chafer 121 and/or sidewall 130.

The sensor device 106 can include a covering 209 made of at least one of rubber, plastic, metal, other material, or any combination thereof. The exterior of the covering 209 can fit into the sensor indentation 206. In some examples, the covering 209 can include a same or similar material as the chafer 121 (and/or sidewall 130). In some embodiments, the covering 209 can include an elongated member configured to fit within a receiving hole in the sensor indentation 206. The covering 209 can be plugged into the receiving hole in the sensor indentation 206 to be secured to the tire 100. In some embodiments, the covering 209 can include an adhesive or chemical agent on an internal side such that when the covering 209 is fitted into the sensor indentation 206, the adhesive or chemical agent is in contact with the sensor indentation 206 and secures the covering 209 in place. The covering 209 can enable connection to the tire 100 using a vulcanization process. In some embodiments, an adhesive is disposed with the sensor indentation 206 of the sidewall and secures the covering 209 in place. According to various examples, other means of securing the covering 209 into the sensor indentation 206 can be used such as, for example, threading, one or more fasteners, snaps, locks, push tabs, or other means.

This figure shows how the ply 127 can wrap around the bead 124 on both sides of the tire 100. The chafer 121 can surround the ply 127 at the internal perimeter of the tire 100. The sidewall 130 can connect to the ply 127 and the chafer 121, protecting the play 127 from the environment at an external side of the tire 100. The liner 133 can connect to the ply 127 and the chafer 121, providing an air-tight seal within the interior of the tire 100, in conjunction with the chafer 121 and other components of the tire 100.

Referring next to FIG. 3, shown is a flowchart that provides one example of how a sensor device 106 can be integrated within a tire 100, according to various examples of the present invention. At step 303, a sensor indentation 206 is provided on a tire 100. In some examples, the sensor indentation 206 can be formed during the curing process of the tire 100. In other examples, the sensor indentation 206 can be formed by cutting, grinding, and/or molding the chafer 121 in a post-curing process. In various examples, the sensor indentation 206 comprises an alignment element that is configured to align the sensor device 106 in a predetermined orientation relative to the tire 100. At step 306, the sensor device 106 is inserted in the sensor indentation 206. In some examples, the sensor device 106 is inserted into the sensor indentation 206 of the chafer 121 during a curing process of the tire 100.

In addition to the foregoing, the various embodiments of the present invention include the embodiments set forth in the following clauses.

Clause 1 - A tire, comprising: a bead of the tire; a ply that wraps around the bead; a chafer configured to form a seal with a rim flange of a wheel; and a sensor indentation in an outward side of the chafer, the sensor indentation configured to receive a sensor device.

Clause 2 - The tire of clause 1, wherein the sensor indentation further comprises an alignment element configured to aligns the sensor device in a predetermined orientation relative to the tire.

Clause 3 - The tire of any one of clauses 1 or 2, further comprising an adhesive disposed relative to at least one of: the sensor indentation, an exterior of the sensor device, or any combination thereof.

Clause 4 - The tire of any one of clauses 1-3, further comprising the sensor device disposed in the sensor indentation, wherein the sensor device forms a flush surface relative to the outward side of the chafer.

Clause 5 - The tire of any one of clause 4, wherein the sensor device comprises at least one of at least one piezoelectric component or at least one inertia sensor component.

Clause 6 - The tire of clause 5, wherein the at least one piezoelectric component comprises an energy harvesting component.

Clause 7 - The tire of clause 5, wherein the at least one piezoelectric component comprises a plurality of strain sensing components.

Clause 8 - A method, comprising: providing a sensor indentation in an outward side a chafer of a tire, the sensor indentation configured to receive a sensor device, wherein the chafer is configured to form a seal with a rim flange of a wheel; and inserting the sensor device into the sensor indentation of the chafer of the tire.

Clause 9 - The method of clause 8, further comprising: attaching the tire to the wheel, wherein the sensor device is at least partially sandwiched between the chafer and the rim flange of the wheel.

Clause 10 - The method of any one of clauses 8 or 9, wherein the sensor device comprises at least one of at least one piezoelectric component or at least one inertia sensor component.

Clause 11 - The method of any one of clauses 8-10, wherein the sensor indentation further comprises an alignment element configured to aligns the sensor device in a predetermined orientation relative to the tire.

Clause 12 - The method of clause 8-11, wherein the sensor device is inserted into the sensor indentation of the chafer during a curing process.

Clause 13 - The method of clause 8-12, wherein the sensor indentation is formed during a curing process.

Clause 14 - The method of clauses 8-11, wherein the sensor indentation is formed by cutting, grinding, or molding the chafer in a post-curing process.

Clause 15 - A system comprising: a tire comprising a sensor indentation in an outward side a chafer of the tire, wherein the chafer is configured to form a seal with a rim flange of a wheel; and a sensor device inserted into the sensor indentation of the chafer of the tire.

Clause 16 - The system of clause 15, wherein the sensor indentation is configured to at least partially sandwich the sensor device between the chafer and the rim flange of the wheel in an instance in which the seal is formed.

Clause 17 - The system of any one of clauses 15 or 16, wherein the sensor device comprises at least one of at least one piezoelectric component or at least one inertia sensor component.

Clause 18. The system of any one of clauses 15-17, wherein the sensor indentation further comprises an alignment element configured to aligns the sensor device in a predetermined orientation relative to the tire.

Clause 19. The system of any one of clauses 15-18, wherein the sensor device comprises a wireless communication device that wirelessly transmits at least one sensor value to a vehicular system of a vehicle.

Clause 20. The system of any one of clauses 15-19, wherein the sensor device comprises a covering comprising at least one of rubber, plastic, metal, or any combination thereof.

## Claims

1. A tire comprising a bead (124) of the tire (100), at least one ply (127) that wraps around the bead (124), a chafer (121) configured to at least partially form a seal with a rim flange (203) of a wheel, and a sensor indentation (206) in an axially outward side of the chafer (121), wherein the sensor indentation (206) is configured to receive a sensor device (106).

2. The tire of claim 1, wherein the sensor indentation (206) further comprises an alignment element configured to align the sensor device (106) in a predetermined orientation relative to the tire (100).

3. The tire of claim 1 or 2, further comprising an adhesive disposed relative to at least one of: the sensor indentation (206), an exterior of the sensor device (106), or any combination thereof.

4. The tire of at least one of the previous claims, further comprising the sensor device (106) disposed in the sensor indentation (206), wherein the sensor device (106) preferably forms a flush surface relative to the axially outward side of the chafer (121).

5. The tire of at least one of the previous claims, wherein the sensor device (106) comprises at least one of at least one piezoelectric component or at least one inertia sensor component, wherein the at least one piezoelectric component preferably comprises an energy generation component and/or a plurality of strain sensing components.

6. A method comprising: providing a sensor indentation (206) in an axially outward side a chafer (121) of a tire (100), wherein the sensor indentation (206) is configured to receive a sensor device (106) and wherein the chafer (121) is configured to at least partially form a seal with a rim flange (203) of a wheel; and inserting the sensor device (106) into the sensor indentation (206) of the chafer (121) of the tire (100).

7. The method of claim 6, further comprising: attaching the tire (100) to the wheel, wherein the sensor device (106) is at least partially sandwiched between the chafer (121) and the rim flange (203) of the wheel.

8. The method of claim 6 or 7, wherein the sensor device (106) comprises at least one of at least one piezoelectric component or at least one inertia sensor component; and/or wherein the sensor indentation further comprises an alignment element configured to align the sensor device (106) in a predetermined orientation relative to the tire (100).

9. The method of at least one of the claims 6 to 8, wherein the sensor device (106) is inserted into the sensor indentation (206) of the chafer (121) during a curing process; and/or wherein the sensor indentation (206) is formed during a curing process.

10. The method of at least one of the claims 6 to 9, wherein the sensor indentation (206) is formed by cutting, grinding, or molding the chafer (121) in a post-curing process.

11. A system comprising a tire (100) comprising a sensor indentation (206) in an axially outward side a chafer (121) of the tire (100), wherein the chafer (121) is configured to at least partially form a seal with a rim flange (203) of a wheel; and wherein a sensor device (106) is inserted into the sensor indentation (206) of the chafer (121) of the tire (100).

12. The system of claim 11, wherein the sensor indentation (206) is configured to at least partially sandwich the sensor device (106) between the chafer (121) and the rim flange (203) of the wheel in an instance in which the seal is formed.

13. The system of claim 11 or 12, wherein the sensor device (106) comprises at least one of at least one piezoelectric component or at least one inertia sensor component; and/or wherein the sensor indentation (206) further comprises an alignment element configured to align the sensor device (106) in a predetermined orientation relative to the tire (100).

14. The system of at least one of the claims 11 to 13, wherein the sensor device (106) comprises a wireless communication device that is configured to wirelessly transmit at least one sensor value to a vehicular system of a vehicle.

15. The system of at least one of the claims 11 to 14, wherein the sensor device (106) comprises a covering (209) comprising at least one of rubber, plastic, metal, or any combination thereof.
